# EUROPÄISCHE PATENTSCHRIFT

(11) **EP 3 979 430 B1**
(45) Veröffentlichungstag und Bekanntmachung des Hinweises auf die Patenterteilung: **12.06.2024**
(21) Anmeldenummer: 21198749.0
(22) Anmeldetag: 24.09.2021
(51) Int. Cl.: H01R 13/52, B29C 45/14, H01R 43/24, H01R 13/405, H01R 43/00, H01R 13/504, H01R 24/20, H01R 13/58, H01R 103/00

(54) **VERFAHREN ZUM KONFEKTIONIEREN EINES MEHRADRIGEN KABELS**
METHOD FOR PREPARING A MULTICORE CABLE
PROCÉDÉ DE CONFECTION D'UN CÂBLE À FILS MULTIPLES

(30) Priorität: 30.09.2020 DE 102020125490
(43) Veröffentlichungstag der Anmeldung: 06.04.2022
(73) Patentinhaber: MD Elektronik GmbH, 84478 Waldkraiburg (DE)
(72) Erfinder: Fiedler, Tobias, 84577 Tübling (DE); Koppermüller, Daniel, 84332 Herbertsfelden (DE); Halbig, Thomas, 92345 Dietfurt (DE)

(56) Entgegenhaltungen:
- EP-A1- 1 122 840
- WO-A1-2017/108803
- DE-C1- 3 623 927
- US-A- 5 279 030
- US-A1- 2005 014 417

## Beschreibung

### GEBIET DER ERFINDUNG

Die vorliegende Erfindung betrifft ein Verfahren zum Konfektionieren eines mehradrigen Kabels.

### HINTERGRUND DER ERFINDUNG

Kabel werden verwendet, um elektrische Komponenten elektrisch leitfähig miteinander zu verbinden. Unter anderem können Kabel zur Übertragung elektrischer Signale mit geringer elektrischer Leistung im Rahmen einer symmetrischen oder nicht symmetrischen Signalübertragung verwendet werden. Solche Signale können beispielsweise in einem Kraftfahrzeug zwischen Komponenten wie etwa Steuergeräten, Sensoren oder Aktoren ausgetauscht werden. Kabel können jedoch auch zur Übertragung hoher elektrischer Leistungen im Rahmen einer Energieversorgung verwendet werden.

Im Rahmen einer Konfektionierung werden Kabel entsprechend ihrem Einsatzzweck angepasst. Hierbei können die Kabel auf eine gewünschte Länge gebracht und an ihren Kabelenden geeignet bearbeitet werden. Insbesondere kann an dem Kabelende eine Stützstruktur angebracht werden, um das Kabel lokal zu stützen oder zu versteifen. Ferner kann an dem Kabelende eine Steckverbindereinheit angebracht werden, um das Kabel mit anderen Kabeln oder einer elektrischen Komponente verbinden zu können. Die Steckverbindereinheit kann eine oder mehrere elektrische Kontaktelemente wie etwa Buchsen oder Kontaktstifte umfassen, die beispielsweise durch einen geeigneten Kontaktträger auf Position gehalten und elektrisch voneinander isoliert werden können. Die Stützstruktur kann beispielsweise dazu dienen, den Kontaktträger am Kabel abzustützen.

DE 10 2005 042 027 A1 beschreibt beispielsweise ein Verfahren zur Herstellung eines Steckverbinders, bei dem Kontakte in einem mittleren Bereich umspritzt werden, um einen vorderen Gehäuseabschnitt des Steckverbinders zu formen, und Kabelanschlussenden der Kontakte umspritzt werden, um einen hinteren Gehäuseabschnitt des Steckverbinders zu formen.

EP 2 545 616 B1 beschreibt einen Steckverbinder mit angeformter Stützstruktur.

US 2005/0014417 A1 zeigt ein weiteres Beispiel für einen in einem

Spritzgussverfahren hergestellten Steckverbinder.

DE 36 23 927 C1 beschreibt ein Verfahren zum Anbringen eines Kupplungsteils einer elektrischen Leitungskupplung am Ende einer mindestens zwei Adern aufweisenden elektrischen Leitung.

### ZUSAMMENFASSUNG DER ERFINDUNG UND VORTEILHAFTER AUSFÜHRUNGSFORMEN

Es kann ein Bedarf an einem Verfahren zum Konfektionieren eines mehradrigen Kabels bestehen, durch das ein Kabelende eines mehradrigen Kabels einfach, zuverlässig und/oder kostengünstig mit einem gegenüber Knick- und Zugbelastungen robusten Steckverbinder versehen werden kann.

Einem solchen Bedarf kann mit dem Gegenstand des unabhängigen Anspruchs entsprochen werden. Vorteilhafte Ausführungsformen sind in den abhängigen Ansprüchen, der nachfolgenden Beschreibung und den beigefügten Figuren dargelegt. Ein erster Aspekt der Erfindung betrifft ein Verfahren zum Konfektionieren eines mehradrigen Kabels. Dabei weist das Kabel mindestens eine erste Ader und eine zweite Ader sowie einen die erste Ader und die zweite Ader zumindest teilweise umgebenden Außenmantel auf. Ferner ist ein Endabschnitt eines Innenleiters der ersten Ader elektrisch leitfähig mit einem ersten Kontaktelement verbunden, während ein Endabschnitt eines Innenleiters der zweiten Ader elektrisch leitfähig mit einem zweiten Kontaktelement verbunden ist. Das Verfahren umfasst zumindest die folgenden Schritte, die vorzugsweise in der angegebenen Reihenfolge ausgeführt werden können: (i) Anordnen des ersten Kontaktelements und des zweiten Kontaktelements in einem Kontaktträger mit einer Kontaktierseite und einer Kabelseite, wobei der Kontaktträger einen die Kontaktierseite mit der Kabelseite verbindenden ersten Längskanal, einen die Kontaktierseite mit der Kabelseite verbindenden zweiten Längskanal, eine den ersten Längskanal kreuzende erste Durchgangsöffnung und eine den zweiten Längskanal kreuzende zweite Durchgangsöffnung aufweist, wobei zumindest ein Abschnitt des ersten Kontaktelements in einem sich zwischen der Kontaktierseite und der ersten Durchgangsöffnung erstreckenden vorderen Teil des ersten Längskanals angeordnet wird und zumindest ein Abschnitt des zweiten Kontaktelements in einem sich zwischen der Kontaktierseite und der zweiten Durchgangsöffnung erstreckenden vorderen Teil des zweiten Längskanals angeordnet wird; (ii) Fluiddichtes Verschließen des ersten Längskanals und der ersten Durchgangsöffnung durch Einführen zweier erster Dichtstücke in die erste Durchgangsöffnung; (iii) Fluiddichtes Verschließen des zweiten Längskanals und der zweiten Durchgangsöffnung durch Einführen zweier zweiter Dichtstücke in die zweite Durchgangsöffnung; und (iv) Formen eines den Kontaktträger mit dem Außenmantel des Kabels verbindenden Verbindungsstückes durch Umspritzen zumindest eines die erste Durchgangsöffnung und die zweite Durchgangsöffnung umfassenden hinteren Abschnitts des Kontaktträgers und eines an der Kabelseite herausragenden Abschnitts des Kabels in einem Spritzgussverfahren.

Eine Ader kann einen elektrisch leitfähigen Innenleiter, etwa in Form eines einzelnen Drahtes oder einer Litze, d. h. eines Geflechts aus mehreren einzelnen Drähten, und einen den Innenleiter zumindest teilweise umgebenden Adermantel aus einem elektrisch isolierenden Material wie etwa einem Kunststoff, insbesondere einem Polymer, umfassen. Ebenso kann der Außenmantel des Kabels aus einem elektrisch isolierenden Material gefertigt sein. Die Adern können beispielsweise an ihren Aderenden abisoliert sein. Die Kontaktelemente können jeweils an einem solchen abisolierten Aderende angebracht und damit elektrisch leitfähig verbunden sein, etwa durch Schweißen, Löten und/oder Crimpen.

Beispielsweise kann die erste Ader eine Nutzsignalader zum Übertragen eines Nutzsignals und die zweite Ader eine Referenzsignalader zum Übertragen eines geeigneten Referenzsignals sein. Anders ausgedrückt kann das Kabel zur Übertragung differenzieller Signale, etwa über Ethernet oder Low Voltage Differential Signaling (LVDS), dienen. Dabei können unerwünschte Störsignale in beiden Adern, etwa infolge induzierter Spannungen oder aufgeprägter Ströme, durch Bilden einer Differenz zwischen dem Nutzsignal und dem Referenzsignal nahezu vollständig eliminiert werden.

Ein erstes bzw. zweites Kontaktelement kann ein längliches, stift- und/oder buchsenförmiges Steckverbinderelement aus einem elektrisch leitfähigen Material wie etwa Metallblech sein. Das Kontaktelement kann beispielsweise einen vorderen Abschnitt entweder in Form einer Buchse zum Aufnehmen eines korrespondierenden stiftförmigen Steckerteils oder in Form eines Stifts zum Einführen in ein korrespondierendes buchsenförmiges Steckerteil aufweisen, während ein hinterer Abschnitt des Kontaktelements mit der entsprechenden Ader elektrisch leitfähig verbunden sein kann. Beispielsweise kann das Kontaktelement als (Blech-)Stanzteil und/oder Biegeteil ausgeführt sein.

Der Kontaktträger kann im Allgemeinen als ein Gehäuse zum Aufnehmen der Kontaktelemente oder als ein Innenteil eines Umgehäuses oder Steckergehäuses aufgefasst werden. Der Kontaktträger kann ausgeformt sein, um die Kontaktelemente relativ zueinander zu positionieren und/oder zu fixieren. Zusätzlich kann der Kontaktträger, wie eingangs angedeutet, als Stützstruktur ausgeformt sein, um die mechanische Belastung der Adern beim An- und Abstecken zu begrenzen. Der Kontaktträger kann aus einem elektrisch isolierenden Material gefertigt sein. Insbesondere kann der Kontaktträger beispielsweise ein Kunststoff-Formteil sein. Der Kontaktträger kann einteilig gefertigt sein, etwa in einem Spritzgussverfahren, oder auch aus mehreren Einzelteilen, beispielsweise aus zwei Halbschalen, zusammengesetzt sein.

Der Kontaktträger kann mehrere Öffnungen, Kanäle oder Aussparungen aufweisen. Unter anderem kann der Kontaktträger für jedes Kontaktelement einen Längskanal aufweisen, bei zwei Kontaktelementen dementsprechend einen ersten Längskanal und einen zweiten Längskanal. Ein solcher erster bzw. zweiter Längskanal kann beispielsweise ein im Wesentlichen gerade verlaufender Verbindungskanal zwischen der Kontaktierseite und der der Kontaktierseite entgegengesetzten Kabelseite des Kontaktträgers sein. Die beiden Längskanäle können dabei im Wesentlichen parallel zueinander ausgerichtet sein. Beispielsweise können die Kontaktelemente beim Konfektionieren des Kabels von der Kabelseite in den jeweiligen Längskanal eingeführt werden, bis zu einer Endposition in Richtung der Kontaktierseite vorgeschoben werden und in dieser Endposition fixiert, etwa verrastet werden. Es ist möglich, dass die Kontaktelemente in ihrer jeweiligen Endposition vollständig innerhalb des jeweiligen Längskanals angeordnet sind. Möglich ist aber auch, dass ein (beispielsweise stiftförmiger) vorderer Abschnitt der Kontaktelemente in deren jeweiliger Endposition an der Kontaktierseite aus dem Kontaktträger herausragt.

Weiter wird jeder der Längskanäle von mindestens einer Durchgangsöffnung durchkreuzt. Bei einer solchen Durchgangsöffnung kann es sich beispielsweise um einen quer zum jeweiligen Längskanal verlaufenden Querkanal handeln, der beispielsweise eine Ober- und Unterseite oder eine Vorder- und Rückseite des Kontaktträgers miteinander verbindet. Bei der ersten und zweiten Durchgangsöffnung kann es sich um separate, d. h. nicht miteinander verbundene Öffnungen im Kontaktträger handeln. Alternativ kann es sich bei der ersten und zweiten Durchgangsöffnung um verschiedene Bereiche einer einzigen, größeren Durchgangsöffnung im Kontaktträger handeln, die sowohl den ersten Längskanal als auch den zweiten Längskanal kreuzt.

Die beiden Durchgangsöffnungen dienen in erster Linie dazu, ein Abdichten des Kontaktträgers für ein nachfolgendes Umspritzen des Kontaktträgers zu ermöglichen. Hierzu werden vor dem Umspritzen in beide Durchgangsöffnungen entsprechend geformte Dichtstücke eingeführt. Ein solches Dichtstück kann insbesondere ein Abdichtwerkzeug sein, d. h. ein Teil, das nach dem Umspritzen des Kontaktträgers wieder vom Kabel entfernt wird. Alternativ kann es sich bei den Dichtstücken um integrale Bestandteile des fertig konfektionierten Kabels handeln. Beispielsweise können die Dichtstücke von einander gegenüberliegenden Seiten in die jeweilige Durchgangsöffnung eingeführt und zusammengeführt werden, bis sie eine Endposition erreichen. Die Dichtstücke können so ausgeformt sein, dass sie in ihrer jeweiligen Endposition sowohl die jeweilige Durchgangsöffnung an deren beiden Enden, also etwa an der Ober- und Unterseite oder Vorder- und Rückseite des Kontaktträgers, als auch den jeweiligen Längskanal zur Kabelseite des Kontaktträgers hin fluiddicht verschließen. Möglich ist beispielsweise, dass eines der zwei ersten bzw. zweiten Dichtstücke als Amboss fungiert, während ein anderes der zwei ersten bzw. zweiten Dichtstücke als Stempel fungiert. Die Dichtstücke können hierbei derart ausgeformt sein, dass sie den jeweiligen Bereich einer Durchgangsöffnung, in den sie eingeführt werden, dichtend ausfüllen. Dabei kann ein als Amboss fungierendes Dichtstück und ein als Stempel fungierendes Dichtstück die jeweilige zwischen diesen Dichtstücken verlaufende Ader dichtend umgeben. Somit wird verhindert, dass beim nachfolgenden Umspritzen flüssiges Spritzgussmaterial, das üblicherweise unter sehr hohen Drücken von bis zu mehreren Hundert Bar in das Spritzwerkzeug eingespritzt wird, von der Kabelseite aus in den vorderen Teil des ersten bzw. zweiten Längskanals gelangt und dort in das jeweilige Kontaktelement eindringt, was dessen Funktionsfähigkeit beeinträchtigen könnte.

Die Abdichtung des Kontaktträgers kann beispielsweise mittels einer oder mehrerer Dichtgabeln erfolgen, wobei die Dichtstücke als speziell geformte Abschnitte einer solchen Dichtgabel ausgeführt sein können. Beispielsweise ist es möglich, dass je eines der ersten Dichtstücke und je eines der zweiten Dichtstücke zu je einer Dichtgabel kombiniert sind. Alternativ können die Dichtstücke auch als Einzelteile oder in einer sonstigen, dem Fachmann geläufigen Form ausgeführt sein. Die Dichtstücke können beispielsweise auch Komponenten eines Spritzgusswerkzeugs sein.

Das Formen des Verbindungsstückes kann mithilfe eines Spritzgusswerkzeugs erfolgen, das im geschlossenen Zustand sowohl einen Abschnitt des Kontaktträgers als auch einen aus dem Kontaktträger herausragenden Abschnitt des Kabels umschließt, d. h. in einer das zu formende Verbindungsstück abbildenden Negativform einschließt. Bei dem zu umspritzenden Abschnitt des Kontaktträgers kann es sich um einen der Kabelseite zugewandten hinteren Abschnitt des Kontaktträgers handeln, in dem auch die erste Durchgangsöffnung und die zweite Durchgangsöffnung angeordnet sind. Hingegen kann sich ein der Kontaktierseite zugewandter vorderer Abschnitt des Kontaktträgers beim Umspritzen außerhalb des Spritzgusswerkzeugs oder zumindest außerhalb der Negativform befinden. Somit wird verhindert, dass flüssiges Spritzgussmaterial von der Kontaktierseite aus in die Längskanäle und die darin befindlichen Kontaktelemente eindringt. Möglich ist aber auch ein vollständiges Umspritzen des Kontaktträgers (siehe unten). Der zu umspritzende herausragende Abschnitt des Kabels kann freiliegende Abschnitte der ersten Ader und der zweiten Ader umfassen, d. h. Abschnitte, in denen der Außenmantel entfernt ist und dementsprechend die jeweiligen Adermäntel der beiden Adern freiliegen. Diese freiliegenden Abschnitte können sich in Längsrichtung des Kabels zwischen der Kabelseite und dem Außenmantel erstrecken. Zusätzlich kann ein Endabschnitt des Außenmantels umspritzt werden. Durch das Verbindungsstück können insbesondere die genannten freiliegenden Abschnitte der Adern stabilisiert, relativ zueinander fixiert und elektrisch voneinander isoliert werden. Unter anderem kann hierbei ein Spalt zwischen den beiden Adern mit dem Spritzgussmaterial ausgefüllt werden (siehe unten). Durch das Verbindungsstück kann ferner eine auf die einzelnen Adern wirkende Zugbelastung begrenzt werden.

Je nach Bedarf kann das Verbindungsstück an seiner Außenfläche beispielsweise mit verschiedenen Funktionsabschnitten ausgeformt werden. Ein solcher Funktionsabschnitt kann beispielsweise eine gegenüber den Durchgangsöffnungen angeordnete ein- oder beidseitige Aussparung sein, die eine (eventuell automatisierte) Sichtkontrolle der im Kontaktträger verlaufenden Aderabschnitte ermöglicht. Somit können Montagefehler, beispielsweise im Rahmen einer Kameraprüfung, frühzeitig erkannt werden. Ein weiteres Beispiel für einen solchen Funktionsabschnitt sind speziell geformte Konturen, etwa Rastnasen, Rastnuten o. Ä., die zum Verrasten eines separaten Steckergehäuses am Verbindungsstück dienen können. Solche Konturen haben den Vorteil, dass das Steckergehäuse einfach montiert und demontiert werden kann.

Zum Formen des Verbindungsstückes kann beispielsweise ein glasfaserverstärkter Kunststoff oder ein sonstiger geeigneter Faser-Kunststoff-Verbund als Spritzgussmaterial eingesetzt werden. Je nach Einsatzzweck können aber auch andere Spritzgussmaterialien zum Formen des Verbindungsstückes verwendet werden.

Zusammengefasst ermöglicht ein derartiges Verfahren ein einfaches, schnelles und zuverlässiges Konfektionieren eines mehradrigen Kabels. Insbesondere kann durch ein Anformen des Verbindungsstückes in einem Spritzgussverfahren auf die Verwendung komplexer Bauteile wie etwa zusätzlicher Kunststoffhalbschalen, zusätzlicher Dichtelemente zum Abdichten des Kontaktträgers oder zusätzlicher, beispielsweise keilartiger Abstandhalter zum Aufweiten der Kabeladern verzichtet werden. Es konnte gezeigt werden, dass das hier beschriebene Verfahren ein einfaches, schnelles und zuverlässiges Konfektionieren von Twisted-Pair-Leitungen mit (beispielsweise ungeschirmten) Zwei-Draht-Steckverbindern, wie sie unter anderem zur Datenübertragung in Kraftfahrzeugen eingesetzt werden, ermöglicht.

Ein derart konfektioniertes Kabel ist besonders robust gegenüber Knick- und Zugbelastungen, insbesondere im Übergangsbereich zwischen dem Kontaktträger und dem Außenmantel des Kabels. Anders ausgedrückt wird durch das umspritzte Verbindungsstück sichergestellt, dass ausreichende Abzugskräfte aufgebracht werden können, ohne dass das Kabel beschädigt wird, beispielsweise einzelne Drähte oder Adern reißen oder brechen.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Gemäß dem Verfahren ein Entfernen der ersten Dichtstücke und der zweiten Dichtstücke nach dem Formen des Verbindungsstückes. Wie weiter oben erwähnt, kann es sich bei den Dichtstücken um entnehmbare Abdichtwerkzeuge handeln. Die Dichtstücke können etwa derart ausgestaltet sein, dass sie vom Kontaktträger abstehen, nachdem sie bis zu einer Endposition in diesen eingeführt worden sind. Diese abstehenden Abschnitte der Dichtstücke können beispielsweise verhindern, dass die Durchgangsöffnungen beim Umspritzen mit Spritzgussmaterial überdeckt werden. Durch das Entfernen der Dichtstücke nach dem Formen des Verbindungsstückes, d. h. nach dem Aushärten des Spritzgussmaterials, ergeben sich entsprechende Aussparungen im Verbindungsstück, die den jeweiligen Durchgangsöffnungen des Kontaktträgers gegenüberliegen bzw. fluchtend in diese übergehen. Somit ist auch nach dem Umspritzen ein Zugriff oder Blick auf die im Kontaktträger befindlichen Adern möglich, etwa im Rahmen einer (eventuell kameragestützten) Qualitätskontrolle.

Gemäß einer Ausführungsform wird zum fluiddichten Verschließen des ersten Längskanals ein in die erste Durchgangsöffnung hineinragender Abschnitt eines Adermantels der ersten Ader zwischen den ersten Dichtstücken eingeklemmt. Zusätzlich oder alternativ kann zum fluiddichten Verschließen des zweiten Längskanals ein in die zweite Durchgangsöffnung hineinragender Abschnitt eines Adermantels der zweiten Ader zwischen den zweiten Dichtstücken eingeklemmt werden. Beispielsweise können die Dichtstücke hierzu an ihren den Adern zugewandten Enden entsprechend geformte, beispielsweise entsprechend gerundete Aussparungen aufweisen. Wesentlich ist, dass die Dichtstücke den jeweiligen Adermantel im eingeklemmten Zustand fluiddicht umschließen, d. h. zusammen mit dem jeweiligen Adermantel einen umlaufenden fluiddichten Dichtrand bilden. Somit kann das Eindringen von flüssigem Spritzgussmaterial zwischen den Dichtstücken und dem jeweiligen Adermantel verhindert werden.

Gemäß einer Ausführungsform weist der Kontaktträger ferner eine den vorderen Teil des ersten Längskanals kreuzende dritte Durchgangsöffnung auf. Dementsprechend umfasst das Verfahren ferner ein fluiddichtes Verschließen der dritten Durchgangsöffnung durch Einführen zweier dritter Dichtstücke in die dritte Durchgangsöffnung. Dabei wird zum Formen des Verbindungsstückes ferner ein die dritte Durchgangsöffnung umfassender Abschnitt des Kontaktträgers umspritzt. Die dritte Durchgangsöffnung kann beispielsweise dazu dienen, das erste Kontaktelement im ersten Längskanal zu verrasten. Beispielsweise kann das erste Kontaktelement hierzu eine oder mehrere Rastnasen oder Rastfedern aufweisen. Um zu verhindern, dass flüssiges Spritzgussmaterial über die dritte Durchgangsöffnung in den vorderen Teil des ersten Längskanals gelangt und damit in das erste Kontaktelement eindringt, kann die dritte Durchgangsöffnung mittels der dritten Dichtstücke beidseitig entsprechend abgedichtet werden. Beispielsweise können die dritten Dichtstücke nach dem Formen des Verbindungsstückes wieder entfernt werden.

Gemäß einer Ausführungsform weist der Kontaktträger ferner eine den vorderen Teil des zweiten Längskanals kreuzende vierte Durchgangsöffnung auf. Dementsprechend umfasst das Verfahren ferner ein fluiddichtes Verschließen der vierten Durchgangsöffnung durch Einführen zweier vierter Dichtstücke in die vierte Durchgangsöffnung. Dabei wird zum Formen des Verbindungsstückes ferner ein die vierte Durchgangsöffnung umfassender Abschnitt des Kontaktträgers umspritzt. Die vierte Durchgangsöffnung kann beispielsweise dazu dienen, das zweite Kontaktelement im zweiten Längskanal zu verrasten. Beispielsweise kann das zweite Kontaktelement hierzu eine oder mehrere Rastnasen oder Rastfedern aufweisen. Um zu verhindern, dass flüssiges Spritzgussmaterial über die vierte Durchgangsöffnung in den vorderen Teil des zweiten Längskanals gelangt und damit in das zweite Kontaktelement eindringt, kann die vierte Durchgangsöffnung mittels der vierten Dichtstücke beidseitig entsprechend abgedichtet werden. Beispielsweise können die vierten Dichtstücke nach dem Formen des Verbindungsstückes wieder entfernt werden.

Ähnlich wie weiter oben im Zusammenhang mit der ersten und zweiten Durchgangsöffnung erwähnt, kann es sich bei der dritten und vierten Durchgangsöffnung entweder um separate Öffnungen im Kontaktträger oder um verschiedene Bereiche einer einzigen, größeren Durchgangsöffnung im Kontaktträger handeln, die sowohl den vorderen Teil des ersten Längskanals als auch den vorderen Teil des zweiten Längskanals kreuzt.

Gemäß einer Ausführungsform wird in dem Spritzgussverfahren ein Spalt zwischen einem aus der Kabelseite herausragenden Abschnitt der ersten Ader und einem aus der Kabelseite herausragenden Abschnitt der zweiten Ader mit einem Spritzgussmaterial ausgefüllt. Dadurch können zum einen Schwankungen eines Abstands zwischen den beiden Adern an der Kabelseite verhindert werden, etwa infolge von Knick- oder Zugbelastungen oder mechanischen Erschütterungen. Zum anderen kann dadurch die elektrische bzw. dielektrische Isolierung zwischen den beiden Adern verbessert werden, da übliches Spritzgussmaterial im Vergleich zu Luft eine deutlich höhere, beispielsweise mindestens doppelt so hohe relative Permittivität aufweist. Letztendlich kann durch diese Ausführungsform sichergestellt werden, dass beide Adern nahezu gleiche Einkopplungs- bzw. Ausgangsimpedanzen aufweisen, wie dies zur Übertragung differenzieller Signale erforderlich ist. Um eine möglichst geringe Störaussendung sowie eine Robustheit gegen Störstrahlung zu gewährleisten, können die herausragenden Abschnitte der beiden Adern auch vollständig in das Spritzgussmaterial eingebettet werden, wodurch die beiden Adern in definiertem Abstand zueinander fixiert werden können. Der Kontaktträger kann einen Keil aufweisen, der sich zumindest teilweise in den Spalt hinein erstreckt, um sicherzustellen, dass beispielsweise, während des Umspritzens die erste und die zweite Ader nicht durch das Spritzgussmaterial aus Ihrer vorgesehenen Position gedrückt werden. Weiterhin können vor dem Schritt des Formens des Verbindungsstückes Halteelemente zwischen die Adern im Bereich des Spalts und/oder außerhalb des Spalts an den Adern positioniert werden, um die Adern während des Umspritzens in Position zu halten. Es ist an dieser Stelle besonders bevorzugt, dass außerhalb des Spalts zwei Halteelemente außerhalb der ersten und der zweiten Ader angeordnet werden, so dass die erste und die zweite Ader außerhalb des Spalts nebeneinander zwischen den zwei Halteelementen verlaufen. Die Halteelemente können nach dem Schritt des Formens von der ersten und zweiten Ader entfernt werden.

Gemäß einer Ausführungsform ist das Verbindungsstück an gegenüber der ersten Durchgangsöffnung und der zweiten Durchgangsöffnung liegenden Stellen ausgespart. Anders ausgedrückt kann die erste bzw. zweite Durchgangsöffnung sowohl durch den Kontaktträger als auch durch das Verbindungsstück hindurchgehen. Beispielsweise kann die erste bzw. zweite Durchgangsöffnung eine Ober- und Unterseite oder eine Vorder- und Rückseite des Verbindungsstückes miteinander verbinden. Dadurch sind im Kontaktträger verlaufende Aderabschnitte von außen zugänglich und/oder einsehbar, was beispielsweise die Qualitätskontrolle vereinfacht.

Gemäß einer Ausführungsform weist der Außenmantel einen profilierten Endabschnitt zum Erzeugen eines Formschlusses in Längsrichtung des Kabels auf. Dabei wird zum Formen des Verbindungsstückes der profilierte Endabschnitt des Außenmantels umspritzt. Der zu umspritzende Endabschnitt des Außenmantels kann beispielsweise mit einer oder mehreren Nuten profiliert sein, die sich zumindest teilweise in Umfangsrichtung des Kabels erstrecken können. Die Nuten können beispielsweise mit Rotativmessern in den Außenmantel eingebracht sein. Der Formschluss kann dann durch Ausfüllen dieser Nut(en) mit dem Spritzgussmaterial erzeugt werden. Somit kann das Verbindungsstück sowohl stoffschlüssig als auch formschlüssig mit dem Außenmantel verbunden werden, was die Robustheit des fertig konfektionierten Kabels gegenüber Zugbelastungen erhöht.

Gemäß einer Ausführungsform umfasst das Kabel ferner ein Steckergehäuse zum Aufnehmen eines Steckers. Dabei ist der Kontaktträger zumindest teilweise in dem Steckergehäuse angeordnet. Das Steckergehäuse kann zum einen zum Schutz der darin angeordneten Komponenten vor Umwelteinflüssen und zum anderen zum mechanischen Koppeln des Kontaktträgers bzw. der Kontaktelemente mit einem entsprechenden Stecker dienen. Beispielsweise kann das Steckergehäuse in Längsrichtung des Kontaktträgers gesehen ein- oder beidseitig über den Kontaktträger hinausragen und/oder den Kontaktträger in dessen Umfangsrichtung teilweise oder vollständig umschließen. Dabei kann das Steckergehäuse zumindest zur Kontaktierseite hin geöffnet sein. Zusätzlich zum Kontaktträger kann zumindest ein Abschnitt des Verbindungsstückes und/oder ein aus dem Verbindungsstück herausragender Abschnitt des Kabels in dem Steckergehäuse angeordnet sein.

Gemäß einer Ausführungsform ist das Steckergehäuse an dem Verbindungsstück befestigt. Dies hat den Effekt, dass beim An- oder Abstecken auf das Steckergehäuse wirkende Kräfte hauptsächlich in das relativ stabile Verbindungsstück eingeleitet werden. Somit können beispielsweise Beschädigungen der Adern oder des Kontaktträgers vermieden werden.

Gemäß einer Ausführungsform weist das Verbindungsstück einen Verrastungsabschnitt auf, in dem das Steckergehäuse verrastet ist. Der Verrastungsabschnitt kann geeignete Konturen oder Strukturen zum form- und/oder kraftschlüssigen Verbinden des Steckergehäuses mit dem Verbindungabschnitt umfassen. Wie weiter oben angedeutet, kann es sich dabei etwa um Rastnasen, Rastnuten o. Ä. handeln. Somit kann das Steckergehäuse mit geringem Fertigungsaufwand am Verbindungsstück positioniert und befestigt werden. Auch ermöglicht diese Ausführungsform eine einfache Demontage des Steckergehäuses.

Gemäß einer Ausführungsform weist das Verbindungsstück einen becherförmigen Abschnitt zum Aufnehmen eines Steckers auf. Der becherförmige Abschnitt des Verbindungsstückes kann beispielsweise über die Kontaktierseite des Kontaktträgers hinausragen und somit zusammen mit dem Kontaktträger eine Steckerbuchse zum Aufnehmen des Steckers bilden. Dadurch kann die Konfektionierung des Kabels weiter vereinfacht werden. Insbesondere kann dadurch die Anbringung einer separaten Steckerbuchse am Kontaktträger entfallen.

Es wird darauf hingewiesen, dass mögliche Merkmale und Vorteile von Ausführungsformen der Erfindung teils mit Bezug auf ein Verfahren zum Konfektionieren eines mehradrigen Kabels, teils mit Bezug auf ein entsprechend konfektioniertes Kabel beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt schematisch ein Kabel vor einem Umspritzen in einem Verfahren gemäß einem Ausführungsbeispiel der vorliegenden Erfindung.
Fig. 2 zeigt schematisch das Kabel aus Fig. 1 nach dem Umspritzen.
Fig. 3 bis 7 zeigen schematisch ein Kabel in verschiedenen Schritten eines Verfahrens gemäß einem Ausführungsbeispiel der vorliegenden Erfindung.
Fig. 8 zeigt schematisch einen Längsschnitt durch einen Kontaktträger aus Fig. 4.
Fig. 9 zeigt schematisch einen Querschnitt durch den Kontaktträger aus Fig. 8 entlang einer Schnittlinie A-A.
Fig. 10 zeigt ein Flussdiagramm zur Veranschaulichung eines Verfahrens gemäß einem Ausführungsbeispiel der Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

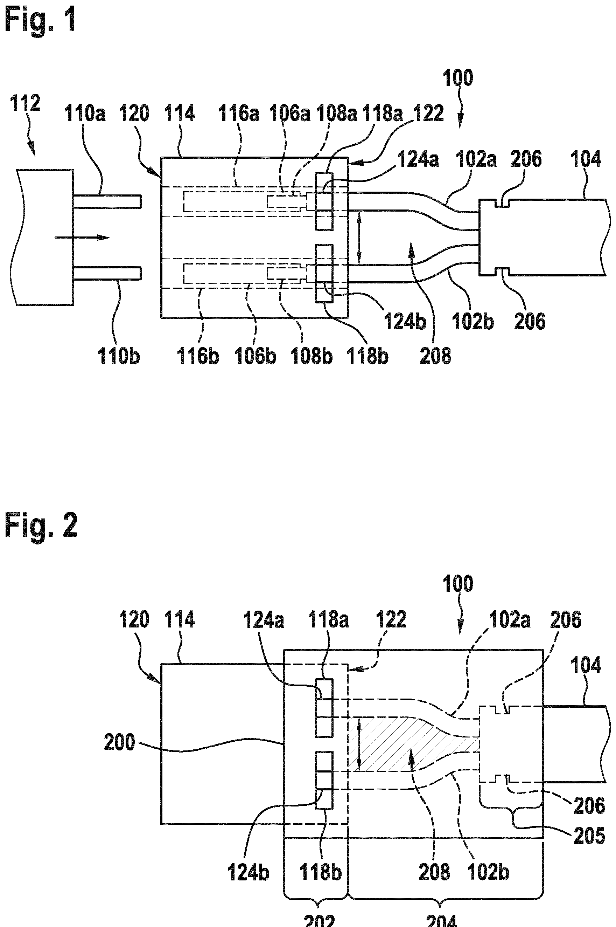

Fig. 1 zeigt schematisch einen Abschnitt eines Kabels 100, das eine erste Ader 102a und eine zweite Ader 102b umfasst. Die beiden Adern 102a, 102b sind teilweise von einem Außenmantel 104 des Kabels 100 umgeben. Ferner umfasst das Kabel 100 ein erstes Kontaktelement 106a und ein zweites Kontaktelement 106b, wobei das erste Kontaktelement 106a elektrisch leitfähig mit einem Endabschnitt eines Innenleiters 108a der ersten Ader 102a verbunden ist und das zweite Kontaktelement 106b elektrisch leitfähig mit einem Endabschnitt eines Innenleiters 108b der zweiten Ader 102b verbunden ist. Die Kontaktelemente 106a, 106b können beispielsweise durch Crimpen, Schweißen und/oder Löten mit dem jeweiligen Innenleiter 108a bzw. 108b verbunden sein. Die Kontaktelemente 106a, 106b sind ferner ausgeformt, um ein entsprechendes Gegenkontaktelement 110a bzw. 110b eines Steckers 112, mit dem das Kabel 100 verbunden werden kann, aufzunehmen. Beispielsweise können die Kontaktelemente 106a, 106b, wie in Fig. 1 angedeutet, jeweils einen buchsenförmigen Abschnitt zur Aufnahme eines entsprechenden stiftförmigen Abschnitts der Gegenkontaktelemente 110a bzw. 110b aufweisen (oder umgekehrt).

Weiter umfasst das Kabel 100 einen Kontaktträger 114 mit einem ersten Längskanal 116a, einem zweiten Längskanal 116b, einer den ersten Längskanal 116a kreuzenden ersten Durchgangsöffnung 118a und einer den zweiten Längskanal 116b kreuzenden zweiten Durchgangsöffnung 118b. Der Kontaktträger 114 hat eine Kontaktierseite 120 und eine der Kontaktierseite 120 gegenüberliegende Kabelseite 122. Die Längskanäle 116a, 116b verbinden jeweils die Kontaktierseite 120 mit der Kabelseite 122. Die beiden Durchgangsöffnungen 118a, 118b können jeweils eine Vorderseite des Kontaktträgers 114 (in Fig. 1 eine dem Betrachter zugewandte Seite) mit einer Rückseite des Kontaktträgers 114 (in Fig. 1 eine vom Betrachter abgewandte Seite) verbinden. Die Durchgangsöffnungen 118a, 118b ermöglichen in erster Linie ein Abdichten des Kontaktträgers 114 mittels geeigneter Dichtstücke, wie es im Folgenden näher beschrieben wird.

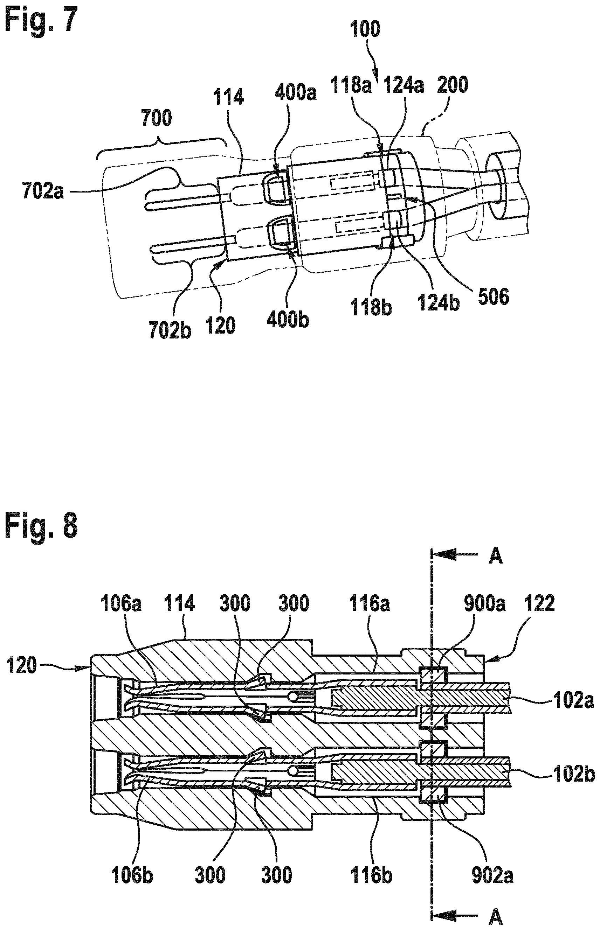

Das erste Kontaktelement 106a ist in einem der Kontaktierseite 120 zugewandten vorderen Teil des ersten Längskanals 116a angeordnet, wobei die erste Ader 102a an der Kabelseite 122 ein Stück weit aus dem ersten Längskanal 116a herausragt. Das zweite Kontaktelement 106b ist in einem der Kontaktierseite 120 zugewandten vorderen Teil des zweiten Längskanals 116b angeordnet, wobei die zweite Ader 102b ein Stück weit an der Kabelseite 122 aus dem zweiten Längskanal 116b herausragt. Die Kontaktelemente 106a, 106b können vollständig, wie in Fig. 1 gezeigt, oder auch nur teilweise, wie in Fig. 7 gezeigt, in ihrem jeweiligen Längskanal 116a bzw. 116b angeordnet sein. Ferner können die Kontaktelemente 106a, 106b in ihrem jeweiligen Längskanal 116a bzw. 116b in einer bestimmten Position fixiert sein, etwa mittels Federkraft und/oder Verrastung, wie in Fig. 8 gezeigt.

Die Kontaktelemente 106a, 106b können derart in ihrem jeweiligen Längskanal 116a bzw. 116b positioniert sein, dass ein Adermantel 124a der ersten Ader 102a in einen Kreuzungsbereich zwischen dem ersten Längskanal 116a und der ersten Durchgangsöffnung 118a hineinragt bzw. ein Adermantel 124b der zweiten Ader 102b in einen Kreuzungsbereich zwischen dem zweiten Längskanal 116b und der zweiten Durchgangsöffnung 118b hineinragt. Die Adermäntel 124a, 124b können auch durch den jeweiligen Kreuzungsbereich hindurchragen, wie in Fig. 1 gezeigt.

Die Durchgangsöffnungen 118a, 118b können beispielsweise breiter sein als der sie kreuzende Längskanal 116a bzw. 116b und den jeweiligen Längskanal 116a bzw. 116b beidseitig hinterschneiden. Beispielhaft sind die Durchgangsöffnungen 118a, 118b in Fig. 1 jeweils schlitzartig mit einem rechteckigen Querschnitt ausgeformt. Die Durchgangsöffnungen 118a, 118b können jedoch auch mit anderen geeigneten Querschnitten ausgeformt sein, etwa mit einem runden oder trapezförmigen Querschnitt.

Wie in Fig. 2 gezeigt, umfasst das Kabel 100 darüber hinaus ein Verbindungsstück 200, das den Kontaktträger 114 am Außenmantel 104 abstützt und die Knick- und Zugbelastung der Adern 102a, 102b reduziert, etwa beim Ein- oder Ausstecken des Steckers 112.

Bei dem Verbindungsstück 200 handelt es sich um ein Formteil, das durch Umspritzen eines der Kabelseite 122 zugewandten und die beiden Durchgangsöffnungen 118a, 118b aufweisenden hinteren Abschnitts 202 des Kontaktträgers 114 sowie eines an der Kabelseite 122 herausragenden Abschnitts 204 des Kabels 100 mit einem geeigneten Spritzgussmaterial in einem Spritzgussverfahren geformt wurde. Dabei kann das Verbindungsstück 200 einen Endabschnitt 205 des Außenmantels 104 umschließen.

Bei dem Spritzgussmaterial kann es sich beispielsweise um einen Polyamid-GlasfaserVerbund handeln. Möglich sind aber auch andere Spritzgussmaterialien.

Um das Verbindungsstück 200 nicht nur stoffschlüssig, sondern zusätzlich formschlüssig mit dem Außenmantel 104 zu verbinden, kann der Endabschnitt 205 des Außenmantels 104 entsprechend profiliert sein. Beispielsweise kann der Endabschnitt 205 mit mindestens einer Nut 206 profiliert sein. Die Nut 206 kann den Außenmantel 104 in dessen Umfangsrichtung vollständig oder auch nur teilweise umlaufen. Die Nut 206 kann beispielsweise mittels eines geeigneten Schneidwerkzeugs in den Außenmantel 104 hineingeschnitten worden sein. Durch Ausfüllen der Nut 206 mit dem Spritzgussmaterial wird schließlich ein in Längsrichtung des Kabels 100 wirkender Formschluss erzeugt.

Das Verbindungsstück 200 kann an Stellen, die den Durchgangsöffnungen 118a, 118b gegenüberliegen, derart ausgespart sein, dass die im Kontaktträger 114 verlaufenden Adermäntel 124a, 124b durch das Verbindungsstück 200 hindurch von außen einsehbar und/oder zugänglich sind. Dabei kann das Verbindungsstück 200 einseitig oder, wie in Fig. 2 gezeigt, beidseitig ausgespart sein.

Um beispielsweise differenzielle Signale über die Adern 102a, 102b übertragen zu können, ist es wichtig, dass die Adern 102a, 102b an der Kabelseite 122 in einem definierten Abstand (in Fig. 1 und Fig. 2 durch einen Doppelfeil markiert) zueinander angeordnet sind, d. h., die beiden Adern 102a, 102b sollten in diesem Bereich durch einen Spalt 208 mit definierter Breite voneinander getrennt sein. Um die Adern 102a, 102b relativ zueinander zu fixieren, kann der Spalt 208 beim Umspritzen mit dem Spritzgussmaterial ausgefüllt werden (siehe den schraffierten Bereich in Fig. 2). Dadurch wird verhindert, dass sich die Breite des Spalts 208 ändert, d. h., dass sich die Adern 102a, 102b signifikant lateral relativ zueinander bewegen. Das den Spalt 208 ausfüllende Spritzgussmaterial fungiert ferner als Dielektrikum zwischen den Adern 102a, 102b. Somit kann eine sich zwischen den Adern 102a, 102b ergebende Permittivität beispielsweise auch bei auftretenden Biegebelastungen weitgehend konstant gehalten werden. Die Adern 102a, 102b können zwischen der Kabelseite 122 und dem Außenmantel 104 auch vollständig in das Spritzgussmaterial eingebettet sein, wie in Fig. 2 gezeigt.

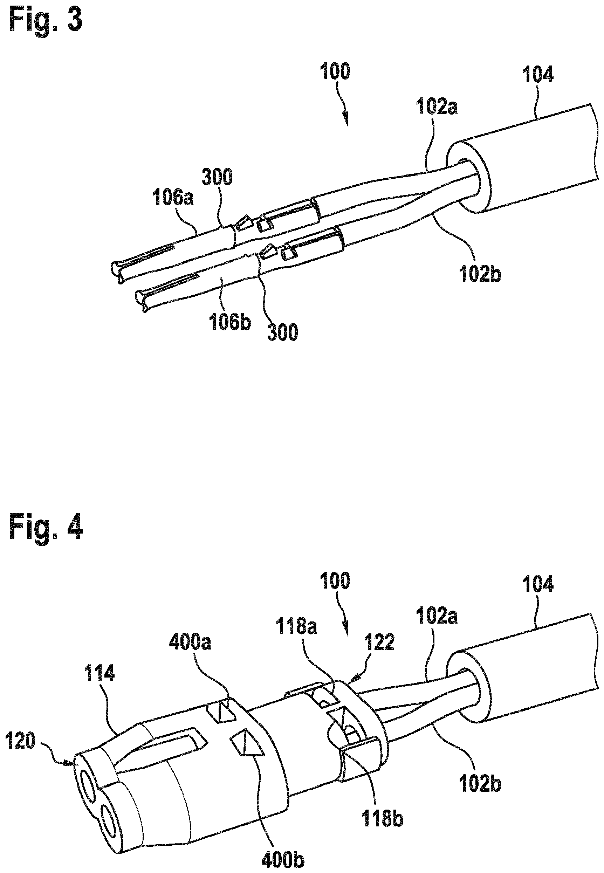

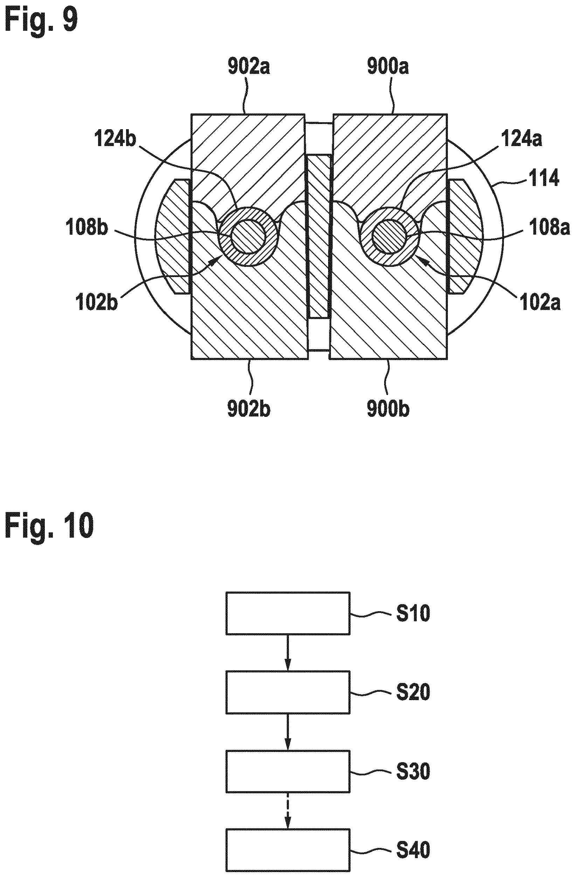

Nachfolgend werden einzelne Schritte eines Verfahrens zum Konfektionieren des Kabels 100 anhand der Figuren 3 bis 10 näher beschrieben. Der prinzipielle Ablauf des Verfahrens ist in Fig. 10 veranschaulicht.

Fig. 3 zeigt einen Endabschnitt des Kabels 100 in einem Ausgangszustand vor dem Anbringen des Kontaktträgers 114. Jedes der Kontaktelemente 106a, 106b kann beispielsweise eine oder mehrere Rastfedern 300 zum Fixieren im Kontaktträger 114 aufweisen (siehe unten). Beispielhaft sind die Kontaktelemente 106a, 106b hier als gebogene Blechstanzteile ausgeführt. Möglich sind jedoch auch andere Ausführungen der Kontaktelemente 106a, 106b.

In Schritt S10 wird der Kontaktträger 114 am Kabel 100 angebracht. Wie bereits weiter oben anhand von Fig. 1 beschrieben, werden dabei die mit den jeweiligen Adern 102a, 102b verbundenen Kontaktelemente 106a, 106b in den Kontaktträger 114 eingeführt und dort mittels der Rastfedern 300 fixiert.

Fig. 4 zeigt eine mögliche Ausführung eines geeigneten Kontaktträgers 114 nach dem Anbringen am Kabel 100 in Schritt S10. Im Unterschied zu Fig. 1 weist der Kontaktträger 114 hier zusätzlich eine den vorderen Teil des ersten Längskanals 116a kreuzende dritte Durchgangsöffnung 400a sowie eine den vorderen Teil des zweiten Längskanals 116b kreuzende vierte Durchgangsöffnung 400b auf. Die Rastfedern 300 der Kontaktelemente 106a, 106b sind in die jeweilige Durchgangsöffnung 400a bzw. 400b eingehakt und verhindern so ein Verrutschen des jeweiligen Kontaktelements 106a bzw. 106b im jeweiligen Längskanal 116a bzw. 116b.

Um zu verhindern, dass beim nachfolgenden Umspritzen Spritzgussmaterial in den die Kontaktelemente 106a, 106b aufnehmenden vorderen Teil der Längskanäle 116a, 116b gelangt, werden in Schritt S20 entsprechende Dichtstücke in die vier Durchgangsöffnungen 118a, 118b, 400a, 400b eingeführt. Hierbei werden zwei erste Dichtstücke 900a, 900b in die erste Durchgangsöffnung 118a und zwei zweite Dichtstücke 902a, 902b in die zweite Durchgangsöffnung 118b eingeführt. Schnittdarstellungen des Kontaktträgers 114 mit den eingeführten Dichtstücken 900a, 900b, 902a, 902b sind in den Figuren 8 und 9 gezeigt. Mittels der vier Dichtstücke 900a, 900b, 902a, 902b wird erreicht, dass flüssiges Spritzgussmaterial weder durch die Durchgangsöffnungen 118a, 118b noch von der Kabelseite 122 aus in die Längskanäle 116a, 116b eindringt.

Zusätzlich können je nach Länge des zu formenden Verbindungsstückes 200 zwei dritte Dichtstücke (nicht gezeigt) in die dritte Durchgangsöffnung 400a und zwei vierte Dichtstücke (nicht gezeigt) in die vierte Durchgangsöffnung 400b eingeführt werden, sodass auch über die Durchgangsöffnungen 400a, 400b kein Spritzgussmaterial in die jeweiligen Längskanäle 116a bzw. 116b eindringen kann.

In Fig. 9 ist gezeigt, dass die Adern 102a, 102b beispielsweise zwischen den jeweiligen Dichtstücken 900a, 900b bzw. 902a, 902b eingeklemmt werden können, um den jeweiligen Längskanal 116a bzw. 116b fluiddicht zu verschließen. Dazu können die Dichtstücke 900a, 900b bzw. 902a, 902b von einander gegenüberliegenden Seiten in die jeweilige Durchgangsöffnung 118a bzw. 118b eingeführt und zusammengeführt werden, beispielsweise bis auf Anschlag.

Die den Adern 102a, 102b zuwandten Enden der jeweiligen Dichtstücke 900a, 900b bzw. 902a, 902b können in geeigneter Weise konturiert sein, insbesondere derart, dass die Adern 102a, 102b im eingeklemmten Zustand fluiddicht von den jeweiligen Dichtstücken 900a, 900b bzw. 902a, 902b umschlossen werden.

Zweckmäßigerweise können die Dichtstücke in ihrer jeweiligen Längsrichtung konusförmig ausgeführt sein. Damit kann eine zuverlässige Abdichtung der jeweiligen Durchgangsöffnung erreicht werden.

Nach dem Abdichten des Kontaktträgers 114 in Schritt S20 wird in Schritt S30 das Verbindungsstück 200 angeformt. Hierzu wird ein zu umspritzender Abschnitt des Kontaktträgers 114 zusammen mit einem zu umspritzenden Abschnitt des Kabels 100 in einem geeigneten Spritzgusswerkzeug angeordnet, das Spritzgusswerkzeug geschlossen und ein durch das Spritzgusswerkzeug begrenzter Hohlraum mit dem Spritzgussmaterial ausgefüllt. Das Anordnen der zu umspritzenden Abschnitte im Spritzgusswerkzeug kann beispielsweise bereits in Schritt S20 erfolgen. Möglich ist auch, dass das fluiddichte Abdichten des Kontaktträgers 114 mittels der Dichtstücke im Spritzgusswerkzeug erfolgt.

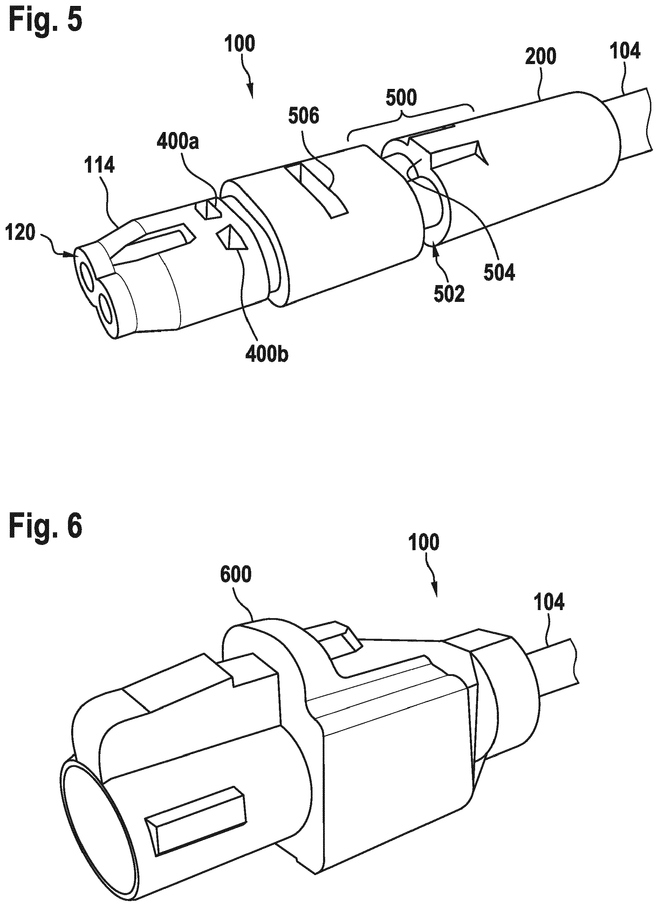

Fig. 5 zeigt eine mögliche Ausführung eines geeigneten Verbindungsstückes 200 nach dem Umspritzen in Schritt S30. In diesem Beispiel umfasst der umspritzte Abschnitt 202 des Kontaktträgers 114 lediglich die erste Durchgangsöffnung 118a und die zweite Durchgangsöffnung 118b. Die dritte Durchgangsöffnung 400a und die vierte Durchgangsöffnung 400b wurden hierbei nicht umspritzt. Es ist jedoch möglich, dass der Kontaktträger 114 vollständig umspritzt wird, wie beispielhaft in Fig. 7 gezeigt. In diesem Fall ist es erforderlich, dass in Schritt S20 zusätzlich die dritte Durchgangsöffnung 400a und die vierte Durchgangsöffnung 400b mittels der dritten bzw. vierten Dichtstücke fluiddicht verschlossen werden.

Wie in Fig. 5 gezeigt, kann das Verbindungsstück 200 einen speziell geformten Verrastungsabschnitt 500 zum Verrasten eines Steckergehäuses 600 (siehe Fig. 6) aufweisen. Der Verrastungsabschnitt 500 kann beispielsweise eine umlaufende Verrastungsnut 502 und/oder einen Anschlag 504 umfassen. Der Anschlag 504 kann dazu dienen, einen Verschiebeweg des Steckergehäuses 600 in Längsrichtung des Kabels 100 zu begrenzen. Der Anschlag 504 kann beispielsweise an eine Kante der Verrastungsnut 502 angrenzen. Der Verrastungsabschnitt 500 kann jedoch auch in anderer geeigneter Weise ausgeformt sein.

Ferner kann das Verbindungsstück 200, wie bereits weiter oben anhand von Fig. 2 beschrieben, ein- oder beidseitig eine schlitzförmige Aussparung 506 gegenüber der ersten Durchgangsöffnung 118a und der zweiten Durchgangsöffnung 118b aufweisen. Die Aussparung 506 kann somit unter anderem als eine Art Sichtfenster zur (beispielsweise kameragestützten) Sichtprüfung der im Kontaktträger 114 verlaufenden Aderabschnitte dienen.

Optional kann in Schritt S40 das Steckergehäuse 600 am Verbindungsstück 200 befestigt werden, etwa durch Verrasten des Steckergehäuses 600 im Verrastungsabschnitt 500 des Verbindungsstückes 200. Das Steckergehäuse 600 kann den Kontaktträger 114 mit dem angeformten Verbindungsstück 200 teilweise oder, wie in Fig. 6 gezeigt, vollständig umgeben. Das Steckergehäuse 600 kann etwa als Steckerbuchse zum Aufnehmen und/oder Verrasten des Steckers 112 (siehe Fig. 1) fungieren.

Wie bereits erwähnt, kann der Kontaktträger 114 auch vollständig in das Verbindungsstück 200 eingebettet sein, wie in Fig. 7 gezeigt. Dabei kann das Verbindungsstück 200 über die Kontaktierseite 120 des Kontaktträgers 114 hinausragen. Insbesondere kann ein an der Kontaktierseite 120 über den Kontaktträger 114 hinausragender Abschnitt 700 des Verbindungsstückes 200 beispielsweise becherförmig ausgeführt sein und so zusammen mit dem Kontaktträger 114 eine Buchse zum Aufnehmen des Steckers 112 bilden. In diesem Fall können die Kontaktelemente 116a, 116b beispielsweise jeweils mit einem stiftförmigen vorderen Abschnitt 702a bzw. 702b ausgeführt sein, der an der Kontaktierseite 120 aus dem Kontaktträger 114 herausragen bzw. in den becherförmigen Abschnitt 700 des Verbindungsstückes 200 hineinragen kann.

Abschließend wird darauf hingewiesen, dass Begriffe wie "aufweisend", "umfassend" usw. keine anderen Elemente oder Schritte ausschließen und Begriffe wie "eine" oder "ein" keine Vielzahl ausschließen. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Kabel
- 102a: erste Ader
- 102b: zweite Ader
- 104: Außenmantel
- 106a: erstes Kontaktelement
- 106b: zweites Kontaktelement
- 108a: Innenleiter der ersten Ader
- 108b: Innenleiter der zweiten Ader
- 110a: erstes Gegenkontaktelement
- 110b: zweites Gegenkontaktelement
- 112: Stecker
- 114: Kontaktträger
- 116a: erster Längskanal
- 116b: zweiter Längskanal
- 118a: erste Durchgangsöffnung
- 118b: zweite Durchgangsöffnung
- 120: Kontaktierseite
- 122: Kabelseite
- 124a: Adermantel der ersten Ader
- 124b: Adermantel der zweiten Ader
- 200: Verbindungsstück
- 202: hinterer Abschnitt des Kontaktträgers
- 204: herausragender Abschnitt des Kabels
- 205: Endabschnitt des Adermantels
- 206: Nut
- 208: Spalt
- 300: Rastfeder
- 400a: dritte Durchgangsöffnung
- 400b: vierte Durchgangsöffnung
- 500: Verrastungsabschnitt
- 502: Verrastungsnut
- 504: Anschlag
- 506: Aussparung
- 600: Steckergehäuse
- 700: becherförmiger Abschnitt des Verbindungsstückes
- 702a: vorderer Abschnitt des ersten Kontaktelements
- 702b: vorderer Abschnitt des zweiten Kontaktelements
- 900a: erstes Dichtstück
- 900b: erstes Dichtstück
- 902a: zweites Dichtstück
- 902b: zweites Dichtstück

## Patentansprüche

1. Verfahren zum Konfektionieren eines mehradrigen Kabels (100), wobei das Kabel (100) mindestens eine erste Ader (102a) und eine zweite Ader (102b) sowie einen die erste Ader (102a) und die zweite Ader (102b) zumindest teilweise umgebenden Außenmantel (104) umfasst, wobei ein Endabschnitt eines Innenleiters (108a) der ersten Ader (102a) elektrisch leitfähig mit einem ersten Kontaktelement (106a) verbunden ist und ein Endabschnitt eines Innenleiters (108b) der zweiten Ader (102b) elektrisch leitfähig mit einem zweiten Kontaktelement (106b) verbunden ist, wobei das Verfahren umfasst:
Anordnen des ersten Kontaktelements (106a) und des zweiten Kontaktelements (106b) in einem Kontaktträger (114) mit einer Kontaktierseite (120) und einer Kabelseite (122), wobei der Kontaktträger (114) einen die Kontaktierseite (120) mit der Kabelseite (122) verbindenden ersten Längskanal (116a), einen die Kontaktierseite (120) mit der Kabelseite (122) verbindenden zweiten Längskanal (116b), eine den ersten Längskanal (116a) kreuzende erste Durchgangsöffnung (118a) und eine den zweiten Längskanal (116b) kreuzende zweite Durchgangsöffnung (118b) aufweist, wobei zumindest ein Abschnitt des ersten Kontaktelements (106a) in einem sich zwischen der Kontaktierseite (120) und der ersten Durchgangsöffnung (118a) erstreckenden vorderen Teil des ersten Längskanals (116a) angeordnet wird und zumindest ein Abschnitt des zweiten Kontaktelements (106b) in einem sich zwischen der Kontaktierseite (120) und der zweiten Durchgangsöffnung (118b) erstreckenden vorderen Teil des zweiten Längskanals (116b) angeordnet wird;
Fluiddichtes Verschließen des ersten Längskanals (116a) und der ersten Durchgangsöffnung (118a) durch Einführen zweier erster Dichtstücke (900a, 900b) in die erste Durchgangsöffnung (118a);
Fluiddichtes Verschließen des zweiten Längskanals (116b) und der zweiten Durchgangsöffnung (118b) durch Einführen zweier zweiter Dichtstücke (902a, 902b) in die zweite Durchgangsöffnung (118b); und
Formen eines den Kontaktträger (114) mit dem Außenmantel (104) des Kabels (100) verbindenden Verbindungsstückes (200) durch Umspritzen zumindest eines die erste Durchgangsöffnung (118a) und die zweite Durchgangsöffnung (118b) umfassenden hinteren Abschnitts (202) des Kontaktträgers (114) und eines an der Kabelseite (122) herausragenden Abschnitts (204) des Kabels (100) in einem Spritzgussverfahren, **gekennzeichnet durch** das
Entfernen der ersten Dichtstücke (900a, 900b) und der zweiten Dichtstücke (902a, 902b) nach dem Formen des Verbindungsstückes (200).

2. Verfahren nach einem der vorhergehenden Ansprüche,
wobei zum fluiddichten Verschließen des ersten Längskanals (116a) ein in die erste Durchgangsöffnung (118a) hineinragender Abschnitt eines Adermantels (124a) der ersten Ader (102a) zwischen den ersten Dichtstücken (900a, 900b) eingeklemmt wird; und wobei zum fluiddichten Verschließen des zweiten Längskanals (116b) ein in die zweite Durchgangsöffnung (118b) hineinragender Abschnitt eines Adermantels (124b) der zweiten Ader (102b) zwischen den zweiten Dichtstücken (902a, 902b) eingeklemmt wird.

3. Verfahren nach einem der vorhergehenden Ansprüche,
wobei der Kontaktträger (114) ferner eine den vorderen Teil des ersten Längskanals (116a) kreuzende dritte Durchgangsöffnung (400a) aufweist;
wobei das Verfahren ferner umfasst:
Fluiddichtes Verschließen der dritten Durchgangsöffnung (400a) durch Einführen zweier dritter Dichtstücke in die dritte Durchgangsöffnung (400a);
wobei zum Formen des Verbindungsstückes (200) ferner ein die dritte Durchgangsöffnung (400a) umfassender Abschnitt des Kontaktträgers (114) umspritzt wird.

4. Verfahren nach einem der vorhergehenden Ansprüche,
wobei der Kontaktträger (114) ferner eine den vorderen Teil des zweiten Längskanals (116b) kreuzende vierte Durchgangsöffnung (400b) aufweist;
wobei das Verfahren ferner umfasst:
Fluiddichtes Verschließen der vierten Durchgangsöffnung (400b) durch Einführen zweier vierter Dichtstücke in die vierte Durchgangsöffnung (400b);
wobei zum Formen des Verbindungsstückes (200) ferner ein die vierte Durchgangsöffnung (400b) umfassender Abschnitt des Kontaktträgers (114) umspritzt wird.

5. Verfahren nach einem der vorhergehenden Ansprüche,
wobei in dem Spritzgussverfahren ein Spalt (208) zwischen einem aus der Kabelseite (122) herausragenden Abschnitt der ersten Ader (102a) und einem aus der Kabelseite (122) herausragenden Abschnitt der zweiten Ader (102b) mit einem Spritzgussmaterial ausgefüllt wird.

6. Verfahren nach einem der vorhergehenden Ansprüche,
wobei der Außenmantel (104) einen profilierten Endabschnitt (205) zum Erzeugen eines Formschlusses in Längsrichtung des Kabels (100) aufweist;
wobei zum Formen des Verbindungsstückes (200) der profilierte Endabschnitt (205) des Außenmantels (104) umspritzt wird.

## Claims

1. Method for preparing a multicore cable (100), wherein the cable (100) comprises at least a first core (102a) and a second core (102b) and an outer sheath (104) which at least partially surrounds the first core (102a) and the second core (102b), wherein an end portion of an inner conductor (108a) of the first core (102a) is electrically conductively connected to a first contact element (106a) and an end portion of an inner conductor (108b) of the second core (102b) is electrically conductively connected to a second contact element (106b), wherein the method comprises:
arranging the first contact element (106a) and the second contact element (106b) in a contact carrier (114) having a contacting side (120) and a cable side (122), wherein the contact carrier (114) has a first longitudinal channel (116a) connecting the contacting side (120) to the cable side (122), a second longitudinal channel (116b) connecting the contacting side (120) to the cable side (122), a first passage opening (118a) crossing the first longitudinal channel (116a) and a second passage opening (118b) crossing the second longitudinal channel (116b), wherein at least a portion of the first contact element (106a) is arranged in a front part of the first longitudinal channel (116a), said front part extending between the contacting side (120) and the first passage opening (118a), and at least a portion of the second contact element (106b) is arranged in a front part of the second longitudinal channel (116b), said front part extending between the contacting side (120) and the second passage opening (118b);
fluid-tightly closing the first longitudinal channel (116a) and the first passage opening (118a) by insertion of two first sealing pieces (900a, 900b) into the first passage opening (118a);
fluid-tightly closing the second longitudinal channel (116b) and the second passage opening (118b) by insertion of two second sealing pieces (902a, 902b) into the second passage opening (118b); and
forming a connecting piece (200), which connects the contact carrier (114) to the outer sheath (104) of the cable (100), by overmoulding at least a rear portion (202) of the contact carrier (114), said rear portion comprising the first passage opening (118a) and the second passage opening (118b), and a portion (204) of the cable (100), said portion projecting on the cable side (122), in an injection moulding method, **characterized by** the
removal of the first sealing pieces (900a, 900b) and the second sealing pieces (902a, 902b) after the connecting piece (200) has been formed.

2. Method according to one of the preceding claims,
wherein a portion of a core sheath (124a) of the first core (102a), said portion projecting into the first passage opening (118a), is clamped between the first sealing pieces (900a, 900b) for the fluid-tight closing of the first longitudinal channel (116a); and wherein a portion of a core sheath (124b) of the second core (102b), said portion projecting into the second passage opening (118b), is clamped between the second sealing pieces (902a, 902b) for the fluid-tight closing of the second longitudinal channel (116b).

3. Method according to one of the preceding claims,
wherein the contact carrier (114) also has a third passage opening (400a) crossing the front part of the first longitudinal channel (116a);
wherein the method further comprises:
fluid-tightly closing the third passage opening (400a) by insertion of two third sealing pieces into the third passage opening (400a);
wherein a portion of the contact carrier (114), said portion comprising the third passage opening (400a), is also overmoulded for formation of the connecting piece (200) .

4. Method according to one of the preceding claims,
wherein the contact carrier (114) also has a fourth passage opening (400b) crossing the front part of the second longitudinal channel (116b);
wherein the method further comprises:
fluid-tightly closing the fourth passage opening (400b) by insertion of two fourth sealing pieces into the fourth passage opening (400b);
wherein a portion of the contact carrier (114), said portion comprising the fourth passage opening (400b), is also overmoulded for formation of the connecting piece (200) .

5. Method according to one of the preceding claims, wherein, in the injection moulding method, a gap (208) between a portion of the first core (102a), said portion projecting out of the cable side (122), and a portion of the second core (102b), said portion projecting out of the cable side (122), is filled with an injection moulding material.

6. Method according to one of the preceding claims,
wherein the outer sheath (104) has a profiled end portion (205) for generating a form-fitting engagement in the longitudinal direction of the cable (100);
wherein the profiled end portion (205) of the outer sheath (104) is overmoulded for formation of the connecting piece (200).

## Revendications

1. Procédé de confection d'un câble multifil (100), le câble (100) comprenant au moins un premier fil (102a) et un deuxième fil (102b) ainsi qu'une gaine extérieure (104) entourant au moins partiellement le premier fil (102a) et le deuxième fil (102b), une section d'extrémité d'un conducteur intérieur (108a) du premier fil (102a) étant reliée de manière électriquement conductrice à un premier élément de contact (106a) et une section d'extrémité d'un conducteur intérieur (108b) du deuxième fil (102b) étant reliée de manière électriquement conductrice à un deuxième élément de contact (106b), le procédé comprenant :
l'agencement du premier élément de contact (106a) et du deuxième élément de contact (106b) dans un support de contact (114) ayant un côté contact (120) et un côté câble (122), le support de contact (114) présentant un premier canal longitudinal (116a) reliant le côté contact (120) au côté câble (122), un deuxième canal longitudinal (116b) reliant le côté contact (120) au côté câble (122), une première ouverture de passage (118a) croisant le premier canal longitudinal (116a) et une deuxième ouverture de passage (118b) croisant le deuxième canal longitudinal (116b), au moins une section du premier élément de contact (106a) étant agencée dans une partie avant du premier canal longitudinal (116a) s'étendant entre le côté contact (120) et la première ouverture de passage (118a), et au moins une section du deuxième élément de contact (106b) étant agencée dans une partie avant du deuxième canal longitudinal (116b) s'étendant entre le côté contact (120) et la deuxième ouverture de passage (118b) ;
la fermeture étanche aux fluides du premier canal longitudinal (116a) et de la première ouverture de passage (118a) par insertion de deux premières pièces d'étanchéité (900a, 900b) dans la première ouverture de passage (118a) ;
la fermeture étanche aux fluides du deuxième canal longitudinal (116b) et de la deuxième ouverture de passage (118b) par insertion de deux deuxièmes pièces d'étanchéité (902a, 902b) dans la deuxième ouverture de passage (118b) ; et
la formation d'une pièce de liaison (200) reliant le support de contact (114) à la gaine extérieure (104) du câble (100) par surmoulage d'au moins une section arrière (202) du support de contact (114) comprenant la première ouverture de passage (118a) et la deuxième ouverture de passage (118b) et d'une section (204) du câble (100) dépassant du côté câble (122) dans un procédé de moulage par injection, **caractérisé par**
le retrait des premières pièces d'étanchéité (900a, 900b) et des deuxièmes pièces d'étanchéité (902a, 902b) après la formation de la pièce de liaison (200).

2. Procédé selon l'une quelconque des revendications précédentes,
dans lequel, pour la fermeture étanche aux fluides du premier canal longitudinal (116a), une section d'une gaine de fil (124a) du premier fil (102a) pénétrant dans la première ouverture de passage (118a) est serrée entre les premières pièces d'étanchéité (900a, 900b) ; et dans lequel, pour la fermeture étanche au fluide du deuxième canal longitudinal (116b), une section d'une gaine de fil (124b) du deuxième fil (102b) pénétrant dans la deuxième ouverture de passage (118b) est serrée entre les deuxièmes pièces d'étanchéité (902a, 902b).

3. Procédé selon l'une quelconque des revendications précédentes,
dans lequel le support de contact (114) présente en outre une troisième ouverture de passage (400a) croisant la partie avant du premier canal longitudinal (116a) ;
le procédé comprenant en outre :
la fermeture étanche aux fluides de la troisième ouverture de passage (400a) par insertion de deux troisièmes pièces d'étanchéité dans la troisième ouverture de passage (400a) ;
dans lequel, pour la formation de la pièce de liaison (200), une section du support de contact (114) comprenant la troisième ouverture de passage (400a) est en outre surmoulée.

4. Procédé selon l'une quelconque des revendications précédentes,
dans lequel le support de contact (114) présente en outre une quatrième ouverture de passage (400b) croisant la partie avant du deuxième canal longitudinal (116b) ;
le procédé comprenant en outre :
la fermeture étanche aux fluides de la quatrième ouverture de passage (400b) par insertion de deux quatrièmes pièces d'étanchéité dans la quatrième ouverture de passage (400b) ;
dans lequel, pour la formation de la pièce de liaison (200), une section du support de contact (114) comprenant la quatrième ouverture de passage (400b) est en outre surmoulée.

5. Procédé selon l'une quelconque des revendications précédentes,
dans lequel, dans le procédé de moulage par injection, un espace (208) entre une section du premier fil (102a) dépassant du côté câble (122) et une section du deuxième fil (102b) dépassant du côté câble (122) est rempli d'un matériau de moulage par injection.

6. Procédé selon l'une quelconque des revendications précédentes,
dans lequel la gaine extérieure (104) présente une section d'extrémité profilée (205) pour créer une liaison par complémentarité de forme dans la direction longitudinale du câble (100) ;
dans lequel la section d'extrémité profilée (205) de la gaine extérieure (104) est surmoulée pour former la pièce de liaison (200) .
